# EUROPEAN PATENT SPECIFICATION

(11) **EP 2 736 303 B1**
(45) Date of publication and mention of the grant of the patent: **23.08.2017**
(21) Application number: 12194503.4
(22) Date of filing: 27.11.2012
(51) Int. Cl.: H04W 24/04, H04W 92/12, H04W 92/22, H04W 88/08

(54) **Method and apparatus for resetting at least one node within a CPRI radio base station system**
Verfahren und Vorrichtung zur Rückstellung von mindestens einem Knoten in einem gemeinsamen öffentlichen Funkbasisstationssystem
Procédé et appareil de réinitialisation d'au moins un noed dans un système de station de base radio CPRI

(43) Date of publication of application: 28.05.2014
(73) Proprietor: NXP USA, Inc., Austin TX 78735 (US)
(72) Inventor: Shor, Roy, 69637 Tel-Aviv (IL); Goren, Ori, 79180 Kibutz Ruchama (IL); Horn, Avraham, 54038 Givat Shmuel (IL); Kahil, Yael, 4339145 Rannana (IL)
(74) Representative: Freescale law department - EMEA patent ops

(56) References cited:
- EP-A1- 2 124 505
- WO-A1-2006/040653
- "CPRI Specification V5.0 - Common Public Radio Interface (CPRI); Interface Specification", , 21 September 2011 (2011-09-21), XP055033500, Retrieved from the Internet: URL:http://www.cpri.info/downloads/CPRI_v_ 5_0_2011-09-21.pdf [retrieved on 2012-07-20]

## Description

### Field of the invention

The field of this invention relates to a method and apparatus for resetting at least one node within a Common Public Radio Interface (CPRI) radio base station system.

### Background of the invention

The Common Public Radio Interface (CPRI™) is an industry cooperation defining a publicly available specification for the key internal interface of radio base stations within, for example, a cellular communication network. In particular, the CPRI specification is currently defined based on standards such as the Universal Mobile Telecommunications System (UMTS), WiMAX Forum Mobile System Profile based on IEEE 802. 16-2009, Evolved UMTS Terrestrial Radio Access (E-UTRA), and GSM (Global System for Mobile communications).

CPRI focuses on a simplified radio base station architecture, dividing the radio base station into a radio subsystem and a control subsystem, and specifying a single interface between the two subsystems. Typically, the control subsystem, made up of one or more Radio Equipment Control (REC) nodes, is concerned with the network interface transport, the radio base station control and management as well as the digital baseband processing. The radio subsystem, made up of one or more Radio Equipment (RE) nodes, typically provides the analogue and radio frequency functions such as filtering, modulation, frequency conversion and amplification. The two subsystems of a base station system may be physically separated; for example the RE node may be located close to the antenna of the base station, whilst the REC node may be located in a more conveniently accessible site. Alternatively, the REC and RE nodes may be co-located as in a conventional radio base station design. The specifications defining the CPRI interface are available at http://www.cpri.info/spec.html,

However, a problem of the known system is that when the REC node that initiates the reset is not located at an uplink end of the CPRI chain; i.e. when the REC node initiating the reset is a networking REC node, resetting all nodes within a CPRI chain is complex. More specific, at least one further reset command is required to initiate the transmission of such a downlink reset request notification. The need for such additional intervention from, say, an application layer core in order to generate the additional reset commands is undesirable, and there is a customer driven need for the resetting of all nodes within a CPRI chain using a single reset command, irrespective of the CPRI architecture topology and location of the reset initiating REC node therein.

WO2006/040653 A1 discloses an interface, apparatus and method for communication between a radio equipment control (REC) node and first and second radio equipment (RE) nodes in a radio base station that transceives information over radio interface using multiple antenna carriers.

CPRI Interface Specification V5.0 (2011-09-21) discloses the necessary items for transport, connectivity and control. This includes User Plane data, Control and Management Plane transport mechanisms, and means for synchronization.

### Summary of the invention

The present invention provides a method of resetting at least one node within a Common Public Radio Interface (CPRI) radio base station system, a CPRI Radio Equipment Controller (REC) module, a CPRI REC node comprising such a CPRI REC module, a radio base station system comprising such a CPRI REC node, and a wireless communication system comprising such a radio base station system as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified block diagram of an example of a CPRI base station system.
FIG. 2 illustrates a simplified block diagram of an example of a CPRI base station system architecture topology.
FIG's 3 and 4 illustrate simplified block diagrams of examples of resetting CPRI nodes within a conventional CPRI base station system.
FIG. 5 illustrates a simplified block diagram of at least a part of a CPRI radio base station system.
FIG. 6 illustrates a simplified block diagram of an example of the CPRI radio base station system of FIG. 5 implemented within a UMTS wireless communication network.
FIG. 7 illustrates a simplified block diagram of an example of an REC node.
FIG's 8 and 9 illustrate a simplified flowchart of an example of a method of resetting nodes within a CPRI radio base station system.

### Detailed description

The present invention will now be described with reference to the accompanying drawings in which an example of a Common Public Radio Interface (CPRI™) architecture is illustrated and described. In particular, an example of CPRI architecture comprising a simple chain topology is illustrated and described. However, it will be appreciated that the present invention is not limited to such a topology, and may equally be implemented within CPRI architectures comprising alternative topologies such as, by way of example only, start topologies, ring topologies, tree topologies, etc. Furthermore, because the illustrated embodiments of the present invention may for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

In some examples of the invention, there is provided a method of resetting at least one node within a CPRI radio base station system, the method comprising, at an end-point REC node within the CPRI radio base station system, receiving on a slave port a reset notification, and in response thereto transmitting on the slave port a reset notification comprising a reset bit being set within at least ten hyperframes.

Furthermore, in some examples of the invention, there is provided a CPRI REC module arranged to provide CPRI functionality within an end-point REC node. The CPRI module is arranged to receive on a slave port thereof a reset notification, and in response thereto transmit on the slave port a reset notification comprising a reset bit being set within at least ten hyperframes.

Furthermore, in some examples of the invention, there is provided a CPRI REC module arranged to provide CPRI functionality within a networking REC node. The CPRI module is arranged to receive on a master port thereof a reset notification comprising a reset bit being set within at least ten hyperframes, and in response thereto transmit on a slave port thereof a reset notification comprising a reset bit being set within at least ten hyperframes.

Furthermore, in some examples of the invention, there is provided a CPRI REC module arranged to provide CPRI functionality within a reset initiating REC node. The CPRI module is arranged to receive a reset command, and in response thereto transmit on an uplink of at least one master port thereof a reset notification.

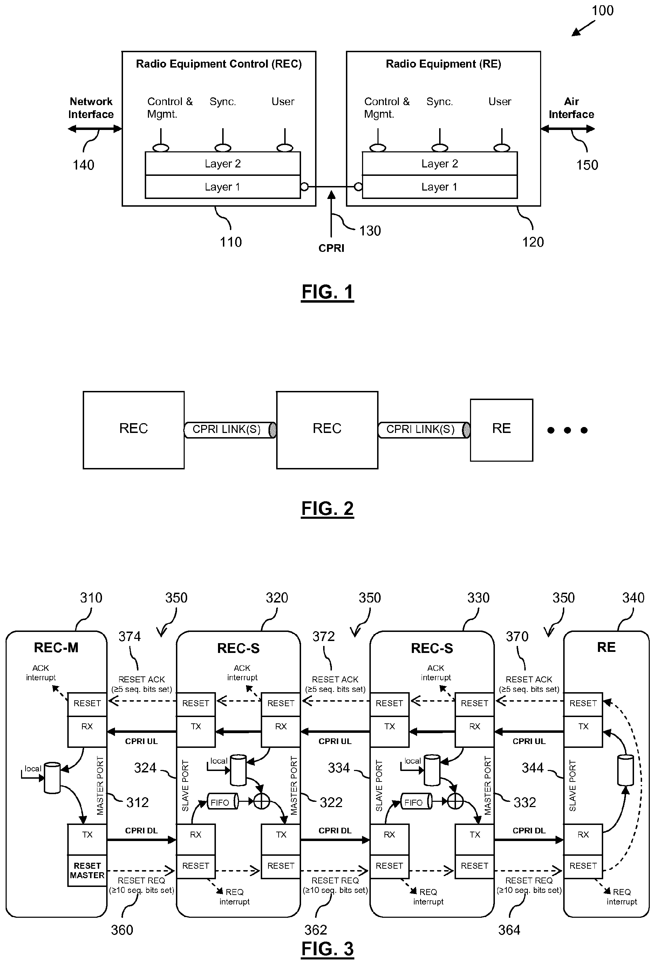

FIG. 1 illustrates a simplified block diagram of an example of a base station system architecture 100 comprising an REC node 110, an RE node 120 and a CPRI link 130 there between. A CPRI link 130 between two nodes comprises a bidirectional interface between two directly connected ports, using one transmission line per direction. Each link consists of a master port and a slave port. The REC node 110 further comprises a network interface 140 for providing access to network entities, whilst the RE node 120 further comprises an air interface 150 to user equipment etc. For example, in a UMTS radio access network, the network interface 140 may comprise an lub interface for providing access to a Radio Network Controller, whilst the air interface 150 may comprise a Uu interface to user equipment.

In addition to the basic system configuration illustrated in FIG. 1 comprising a single REC node 110, a single RE node 120 and a single CPRI link 130 there between, the CPRI specification supports various other configurations, as outlined in Section 2.3 of the specification. For example, more than one CPRI link 130 may be provided between an REC node 110 and an RE node 120 to enhance the system capacity. Furthermore, several RE nodes 120 may be served by one REC node 110, with one or more CPRI links 130 being provided between the REC node 110 and each RE node 120 (star topology). Other topologies expressly supported by the CPRI specification are point-to-point links, and all topologies such as chain topologies, tree topologies and ring topologies are based on this. The CPRI specification also identifies the possibility of one RE node 120 being served by multiple REC nodes 110, as illustrated in FIG. 2. As such, the CPRI specification supports multiple 'hops' in a network configuration between an REC node 110 and an RE node 120.

The remote resetting of nodes is managed by way of a Reset bit within each hyperframe (one hyperframe being made up of 256 basic frames), whereby the Reset bit, bit Z. 130.0 of the L1-inband protocol, is used for reset request notifications on downlinks (i.e. in the direction from an REC node 110 to an RE node 120), and for reset acknowledgement notifications on uplinks (i.e. in the direction from an RE node 120 to an REC node 110). A reset request notification comprises the Reset bit being 'set' (i.e. being set to a '1' value) for at least 10 hyperframes, whilst a reset acknowledgement notification comprises the Reset bit being set for at least 5 hyperframes. The CPRI specification also states that a reset request notification can only be sent from a master port to a slave port. When a node receives a valid reset notification on any of its slave ports, it not only resets itself, but also forwards the reset request notification on all (if any) of its master ports.

FIG. 3 illustrates a simplified block diagram of an example of a multi-hop CPRI topology comprising three REC nodes 310, 320, 330 and one RE node 340. CPRI links 350 are provided between REC nodes 310 and 320, REC nodes 320, 330 and between REC node 330 and RE node 340 respectively. In the example illustrated in FIG. 3, the first REC node 310 in the chain comprises a end-point REC node, with the other two REC nodes 320, 330 comprising networking REC nodes. It is possible to reset the entire CPRI chain with a single reset command, for example generated within an application layer (not shown) of the REC master node 310, whereby upon receipt of such a reset command the end-point REC node 310 transmits on a master port 312 thereof a reset request notification 360 over the CPRI link 350 to the second REC node 320.

The second REC node 320 receives the reset request notification 360 transmitted by the end-point REC node 310 on a slave port 324 thereof, and in response thereto a reset request interrupt may be generated in order to inform, say, an application layer (not shown) of the REC node 320 that a reset of the node is required. Alternatively, the application layer (not shown) may be arranged to poll the values of the L1-inband protocol to determine when a reset of the node is required. The second REC node 320 then forwards the reset request on to the next node in the chain by transmitting on a master port 322 thereof a reset request notification 362 over the CPRI link 350 to the third REC node 330.

The third REC node 330 receives the reset request notification 362 transmitted by the second REC node 320 on a slave port 334 thereof, and in response thereto a reset request interrupt may be generated in order to inform, say, an application layer (not shown) of the REC node 330 that a reset of the node is required. The third REC node 330 then forwards the reset request on to the next node in the chain by transmitting on a master port 332 thereof a reset request notification 364 over the CPRI link 350 to the RE node 340.

The RE node 340 receives the reset request notification 364 transmitted by the third REC node 330 on a slave port 344 thereof, and in response thereto a reset request interrupt may be generated in order to inform, say, an application layer (not shown) of the RE node 340 that a reset of the node is required. In the illustrated example, the RE node 340 is located at the end of the CPRI chain. Accordingly, the RE node 340 transmits on the slave port 344 a reset acknowledgement notification 370 over the CPRI link 350 back to the third REC node 330.

The third REC node 330 receives the reset acknowledgement notification 370 transmitted by the RE node 340 on its master port 332, and in response thereto a reset acknowledgement interrupt may be generated in order to inform, say, the application layer (not shown) of the REC node that the reset request notification transmitted to the downlink nodes (i.e. the RE node 340) has been acknowledged. The third REC node 330 then forwards the reset acknowledgement on up the chain by transmitting on its slave port 334 a reset acknowledgement notification 372 over the CPRI link 350 to the second REC node 320.

The second REC node 320 receives the reset acknowledgement notification 372 transmitted by the third REC node 330 on its master port 322, and in response thereto a reset acknowledgement interrupt may be generated in order to inform, say, the application layer (not shown) of the REC node that the reset request notification transmitted to the downlink nodes (i.e. the RE node 340 and the third REC node 330) has been acknowledged. The second REC node 320 then forwards the reset acknowledgement on up the chain by transmitting on its slave port 334 a reset acknowledgement notification 374 over the CPRI link 350 to the end-point REC node 310.

The end-point REC node 310 receives the reset acknowledgement notification 374 transmitted by the second REC node 320 on its master port 312, and in response thereto a reset acknowledgement interrupt may be generated in order to inform, say, the application layer (not shown) of the end-point REC node that all downlink nodes have acknowledged the reset notification. Thus, in this manner, a single reset command may be used to initiate a reset of all the nodes within the CPRI chain. In particular, when the end-point REC node is located at an uplink end of the CPRI chain, all nodes in the CPRI chain are able to be reset using a single reset command whilst confirming to the CPRI specification requirements of:
- reset request notifications comprising the Reset bit being 'set' (i.e. being set to a '1' value) for at least 10 hyperframes;
- reset acknowledgement notifications comprising the Reset bit being set for at least 5 hyperframes; and
- reset request notifications only being sent from a master port to a slave port.

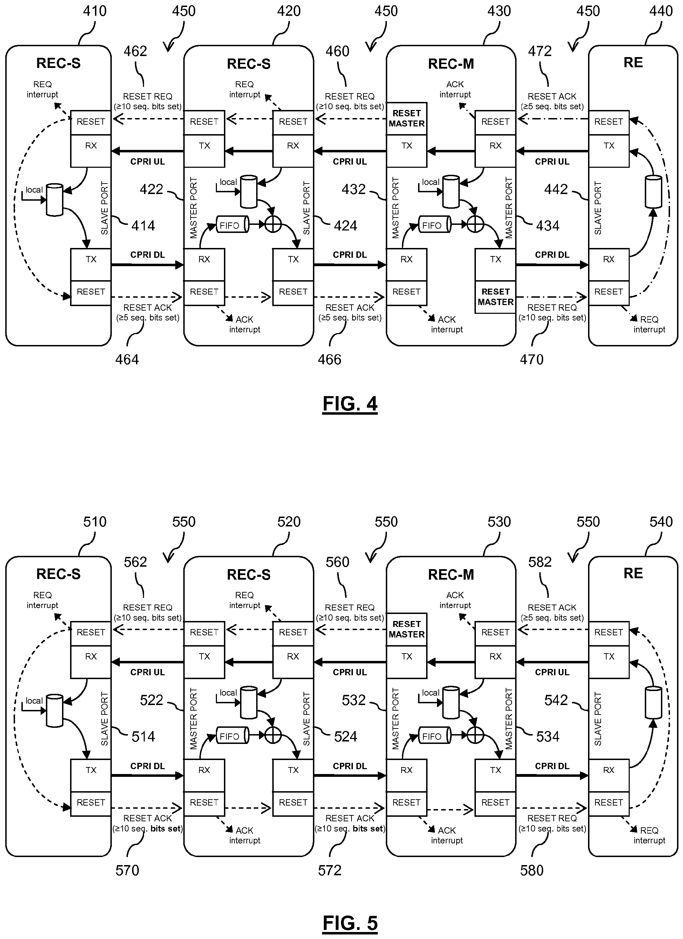

FIG. 4 illustrates a simplified block diagram of an example of a multi-hop CPRI topology comprising three REC nodes 410, 420, 430 and one RE node 440, with CPRI links 450 provided between REC nodes 410 and 420, REC nodes 420 and 430, and between REC node 430 and RE node 440 respectively. In the example illustrated in FIG. 4, the third REC node 430 in the chain initiates a reset, with the other two REC nodes 410, 420 comprising reset subordinate REC nodes.

In order to reset the reset subordinate REC nodes 410, 420 located in the uplink direction within the CPRI chain, the third REC node 430 transmits on a master port 432 thereof a reset request notification 360 over the CPRI link 450 to the second REC node 320.

The second REC node 420 receives the reset request notification 460 transmitted by the third REC node 430 on a slave port 424 thereof, and in response thereto a reset request interrupt may be generated. The second REC node 420 then forwards the reset request on to the next node in the chain by transmitting on a master port 422 thereof a reset request notification 462 over the CPRI link 450 to the first REC node 410.

The first REC node 410 receives the reset request notification 462 transmitted by the second REC node 420 on a slave port 414 thereof, and in response thereto a reset request interrupt may be generated. In the example illustrated in FIG. 4, the first REC node 410 comprises an end-point REC node at the end of the CPRI chain. Accordingly, the first REC node 410 transmits on the slave port 414 a reset acknowledgement notification 464 over the CPRI link 450 back to the second REC node 420.

The second REC node 420 receives the reset acknowledgement notification 464 transmitted by the first REC node 410 on its master port 422, and in response thereto a reset acknowledgement interrupt may be generated. The second REC node 420 then forwards the reset acknowledgement on to the third REC node 430 by transmitting on its slave port 334 a reset acknowledgement notification 466 over the CPRI link 450 to the third REC node 430.

The third REC node 430 receives the reset acknowledgement notification 466 transmitted by the second REC node 420 on its master port 432, and in response thereto a reset acknowledgement interrupt may be generated. In this manner, the reset subordinate REC nodes located upstream of the third REC node 430 may be reset by a single command.

Referring now to FIG. 5, there is illustrated a simplified block diagram of at least a part of a CPRI radio base station system 500. In the illustrated example, the CPRI radio base station system 500 comprises three Radio Equipment Controller (REC) nodes 510, 520, 530 and one Radio Equipment (RE) node 540. CPRI links 550 are established between REC nodes 510 and 520, REC nodes 520 and 530, and between REC node 530 and RE node 540. In this manner, the REC nodes 510, 520, 530 and the RE node 540 are arranged in a simple chain topology. In the example illustrated in FIG. 5, the first REC node 510 comprises an end-point REC node, whilst the second and third REC nodes 520, 530 comprise networking REC nodes.

The CPRI radio base station system 500 illustrated in FIG. 5 may form part of any appropriate wireless communication system, such as:
- a Universal Mobile Telecommunications System (UMTS) wireless communications network;
- a WiMAX wireless communication network;
- an Evolved UMTS Terrestrial Radio Access (E-UTRA) wireless communications network; and
- a Global System for Mobile communications (GSM) wireless communications network.

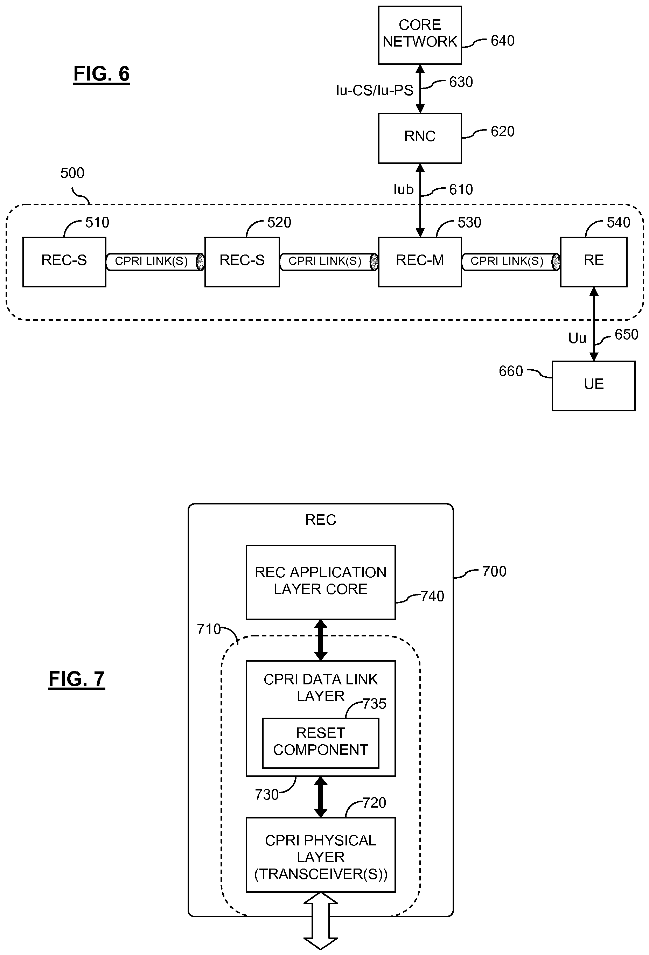

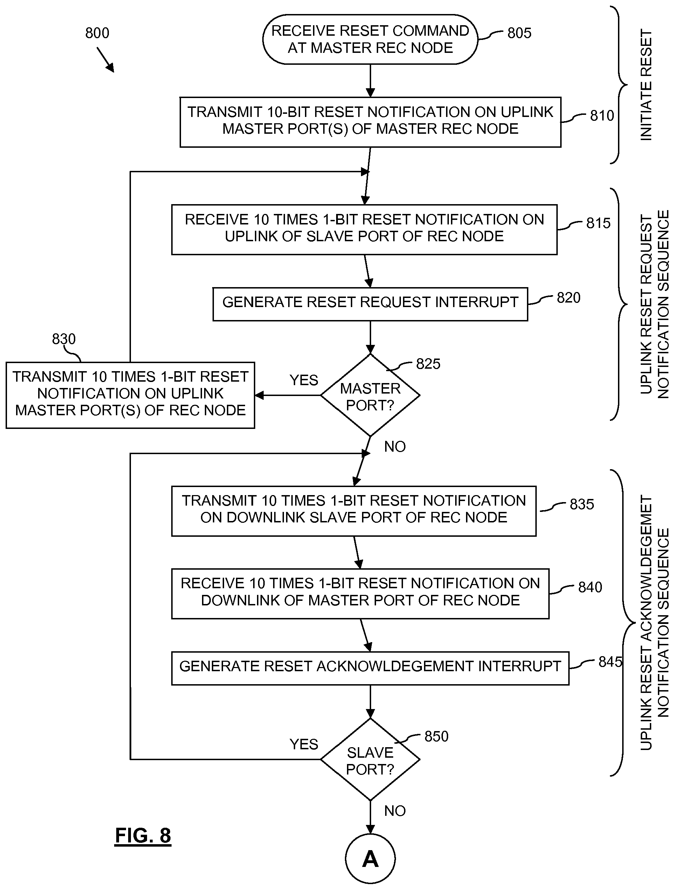

FIG. 6 illustrates an example of the CPRI radio base station system 500 implemented within a UMTS wireless communication network 600. In the example illustrated in FIG. 6, the third REC node 530 comprises a network interface in the form of an lub interface 610 for providing access to a Radio Network Controller (RNC) 620. The RNC 620 in turn is operably coupled to a core network component 640 of the UMTS network 600 via an lu-PS and/or lu-CS interface 630. In addition, the RE node 540 comprises an air interface in the form of a Uu interface 650 to user equipment 660.

FIG. 7 illustrates a simplified block diagram of an example of an REC node 700, such as one of the REC nodes 510, 520, 530 of FIG. 5. The REC node 700 comprises at least one CPRI module 710. The (or each) CPRI module 710 comprises at least one CPRI physical layer component 720, for example comprising one or more transceiver components, arranged to establish at least one CPRI link with one or more further nodes within a CPRI radio base station system. The CPRI module 710 further comprises at least one CPRI data link layer component 730 arranged to communicate with one or more data link layer(s) within one or more further node(s) within a CPRI radio base station system via CPRI link(s) established by the CPRI physical layer component 720. In the illustrated example, the CPRI data link layer component 730 comprises a reset component 735 arranged to handle the receipt of reset commands received from, say the application layer core, and also the receipt and transmission of reset notifications via the CPRI physical layer 720. The CPRI module 710 further comprises an application layer core 740, arranged to provide control and management commands to the CPRI module 710, and to provide data to the CPRI module 720 be transmitted over a CPRI link and receive data from the CPRI module 720 received via a CPRI link. The CPRI module 710 may be implemented within an integrated circuit device comprising at least one die within a single integrated circuit package.

Referring now to FIG's 8 and 9, there is illustrated a simplified flowchart 800, 900 of an example of a method of resetting nodes within a CPRI radio base station system, such as may be implemented within the CPRI radio base station system 500 illustrated in FIG. 5. The method starts at 805 with the receipt of a reset command at a networking REC node, such as the third REC node 530 in the example illustrated in FIG. 5. Such a reset command may be generated, say, within an application layer of the third REC node 530, and provided to a data link layer component 730 of a CPRI module 710 of the third REC node 530. Upon receipt of the reset command, the method moves on to 810, where a reset notification is transmitted on an (or each) uplink master port of the REC node; the reset notification comprising the Reset bit (e.g. bit Z. 130.0 of the L1-inband protocol) of the respective CPRI link being set for at least ten hyperframes. Thus, in the example illustrated in FIG. 5, a reset component 735 (in FIG. 7) of the data link layer 730 of the CPRI module 710 of the third REC node 530 transmits on a master port 532 thereof a reset request notification 560 over the CPRI link 550 to the second REC node 520. In this manner, a reset of the nodes within the CPRI radio base station system 500 may be initiated. For clarity, the term 'uplink' used herein refers to a directional link directed away from user equipment, whilst the term 'downlink' used herein refers to a directional link directed towards user equipment; as is consistent with the use of such terms within the CPRI specification.

The reset notification transmitted by the master REC node is then received on an uplink of a slave port of a networking REC node at 815, and a reset request interrupt is generated at 820. For example, in the example illustrated in FIG. 5, the reset notification 560 transmitted by the master REC node 530 is received on an uplink of a slave port 524 of the second REC node 520. In particular, a reset component 735 (in FIG. 7) of a CPRI data link layer component 730 of the second REC node 520 receives the reset notification 560, which comprises the Reset bit being set for at least ten hyperframes, and identifies the reset notification received on the slave port 524 as a reset request notification in accordance with the CPRI specification. The reset component 735 (in FIG. 7) may then generate the reset request interrupt in order to inform, say, an application layer of the REC node 520 that a reset of the node is required.

If, at 825, the REC node that received the reset notification on an uplink of a slave port thereof comprises one or more master ports, i.e. the REC node comprises a networking REC node and not an end-point REC node, the method moves on to 830, where a reset notification comprising the Reset bit being set for at least ten hyperframes is transmitted on the (or each) master port of the REC node, and the method loops back to 815 where the reset notification is received on an uplink of a slave port of a next REC node in the chain. For example, in FIG. 5 the reset component 735 (in FIG. 7) of the second REC node 520 may be arranged to forward the reset request on to the master port 522 of the second REC node 520 for transmission as a reset request notification 562 over the CPRI link 550 to the first REC node 510. In this manner, an uplink reset request notification sequence may be implemented, whereby a reset request comprising the Reset bit being set for at least ten hyperframes may be sequentially transmitted along the CPRI node chain in the uplink direction.

Referring back to 825, if the REC node that received the reset notification on an uplink of a slave port thereof comprises no master ports, i.e. the REC node comprises an end-point REC node such as the first REC node 510 in FIG. 5, the method moves on to 835, where a reset acknowledgement notification comprising the Reset bit being set for at least ten hyperframes is transmitted back on a downlink of the slave port on which the reset notification received thereby had been received. For example, in FIG 5 the reset component 735 (in FIG. 7) of the first REC node 510 may be arranged to instruct the slave port 514 to transmit such a reset notification 570 back over the CPRI link 550 to the second REC node 520. In this manner, when a reset request notification reaches an end-point REC node, a reset acknowledgement notification is returned back along the CPRI chain. Note, in contrast to conventional reset acknowledgement notifications which comprise the Reset bit being set for at least five hyperframes, in the method illustrated in FIG's 8 and 9 the reset acknowledgement notification transmitted back by the end-point REC node comprises the Reset bit being set for at least ten hyperframes.

The reset notification transmitted by the REC node on a downlink of the slave port thereof is subsequently received on a master port of an REC node at 840, and a reset acknowledgement interrupt is generated at 845. For example, in the example illustrated in FIG. 5, the reset notification 570 transmitted by the first REC node 510 is received on a downlink of the master port 522 of the second REC node 520. In particular, a reset component 735 (in FIG. 7) of a CPRI data link layer component 730 (in FIG. 7) of the second REC node 520 receives the reset notification 570, which comprises the Reset bit being set for at least ten hyperframes, and identifies the reset notification received on the master port 522 as a reset acknowledgement notification in accordance with the CPRI specification, since it still complies with the requirement for reset acknowledgement notifications to comprise the Reset bit being set for at least five hyperframes. The reset component 735 (in FIG. 7) may then generate the reset acknowledgement interrupt in order to inform, say, an application layer of the REC node 520 that the reset request notification transmitted to the uplink nodes (i.e. the first REC node 510) has been acknowledged.

If, at 850, the REC node that received the reset notification on a downlink of a master port thereof comprises one or more slave ports, i.e. the REC node is reset initiating REC node, the method loops back to 835, where a reset acknowledgement notification comprising the Reset bit being set for at least ten hyperframes is transmitted on a downlink of the (or each) slave port. For example, in FIG 5 the reset component 735 (in FIG. 7) of the second REC node 520 may be arranged to forward the reset acknowledgement received on the master port 522 on to the slave port 524 for transmission as a reset acknowledgement notification 572 over the CPRI link 550 to the third REC node 530. In this manner, when the reset acknowledgement notification may be forwarded back along the CPRI chain. Again, in contrast to conventional reset acknowledgement notifications which comprise the Reset bit being set for at least five hyperframes, in the method illustrated in FIG's 8 and 9 the reset acknowledgement notification transmitted back by the end-point REC node comprises the Reset bit being set for at least ten hyperframes.

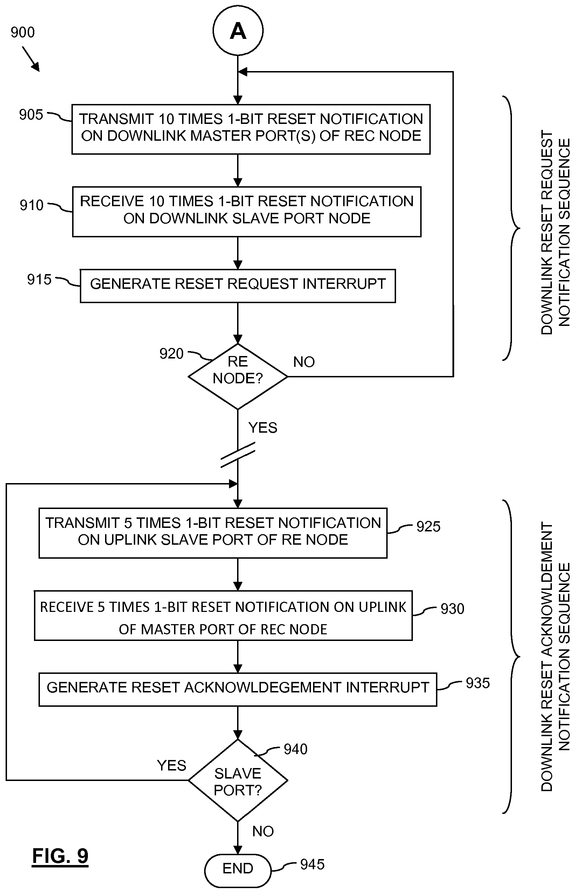

Referring back to 850, if the REC node that received the reset notification on a downlink of a master port thereof comprises no slave ports, i.e. the REC node is the reset initiating REC node, the method moves on to 905 (FIG. 9), where a reset notification is transmitted on an (or each) downlink master port of the reset initiating REC node; the reset notification comprising the Reset bit of the respective CPRI link being set for at least ten hyperframes. Thus, in the example illustrated in FIG. 5, the reset component 735 (in FIG. 7) of the third REC node 530 may forward the reset acknowledgement notification 572 received on the upstream master port 532 on to the downstream master port 534 for transmission as a reset request notification 580 over the CPRI link 550 to the RE node 540.

Note that, since the reset acknowledgement notification 572 received on the upstream master port 532 comprised the Reset bit being set for at least ten hyperframes, as opposed to just five in conventional implementations, the reset request notification 580 based thereon will also comprise the Reset bit being set for at least ten hyperframes, and thus will fulfil the requirements for a reset request notification defined in the CPRI specification. Had the reset acknowledgement notification 572 received by the third REC node 530 comprised a conventional reset acknowledgement notification comprising the Reset bit being set for only at least five hyperframes, subsequent reset request notification 580 transmitted by the third REC node 530 to the RE node 540 would also only comprise the Reset bit being set for at least five hyperframes, requiring all nodes located on the downstream side of the third REC node 530 to interpret the Reset bit being set for at least five hyperframes on their slave ports as representing a reset request notification, which would be in violation of the CPRI specification, and thus would not be an acceptable solution.

The reset notification transmitted by the reset initiating REC node is then received on a downlink of a slave port of a node at 910, and a reset request interrupt is generated at 915. For example, in the example illustrated in FIG. 5, the reset notification 580 transmitted by the third REC node 530 is received on a downlink of a slave port 542 of the RE node 540.

If, at 920, the node that received the reset notification on a downlink of a slave port thereof is not an RE node, the method loops back to 905. In this manner, a downlink reset request notification sequence may be implemented, whereby a reset request comprising the Reset bit being set for at least ten hyperframes may be sequentially transmitted along REC nodes within the CPRI node chain in the downlink direction.

Referring back to 920, if the node that received the reset notification on a downlink of a slave port thereof is an RE node, the method moves on to 925, where a reset acknowledgement notification is transmitted back on a uplink of the slave port on which the reset notification received thereby had been received. For example, in FIG 5 a reset component of the RE node 540 may be arranged to instruct the slave port 542 to transmit such a reset notification 820 back over the CPRI link 550 to the third REC node 530. In the illustrated example, this reset acknowledgement notification comprises the Reset bit being set for at least five hyperframes, in accordance with the CRPI specification. However, it is contemplated that it too may comprise a Reset bit being set for at least ten hyperframes.

The reset notification transmitted on the uplink of the slave port is subsequently received on a master port of an upstream REC node at 930, and a reset acknowledgement interrupt is generated at 935. For example, in the example illustrated in FIG. 5, the reset notification 582 transmitted by the RE node 540 is received on an uplink of the master port 534 of the third REC node 530. In particular, a reset component 735 (in FIG. 7) of a CPRI data link layer component 730 (in FIG. 7) of the third REC node 530 may receive the reset notification 582, which comprises the Reset bit being set for at least five (or ten) hyperframes, and identifies the reset notification received on the master port 534 as a reset acknowledgement notification in accordance with the CPRI specification, since it comprises the Reset bit being set for at least five hyperframes. The reset component 735 (in FIG. 7) may then generate the reset acknowledgement interrupt in order to inform, say, an application layer of the third REC node 530 that the reset request notification transmitted to the downlink nodes (i.e. the RE node 540) has been acknowledged.

If, at 960, the REC node that received the reset notification on the uplink of a master port thereof comprises one or more slave ports, i.e. is not the reset initiating REC node, the method loops back to 925. Conversely, if the REC node that received the reset notification on the uplink of a master port thereof comprises no slave ports, i.e. is the reset initiating REC node, the method ends.

In the illustrated example, the present invention has been described in relation to an example CPRI radio base station system 500 comprising only a single RE node 540. However, it will be appreciated that the present invention may equally be implemented within a CPRI radio base station system comprising a plurality of RE nodes 540. Accordingly, it will be understood that the method of FIG's 8 and 9 may comprise additional steps between 920 and 925 corresponding to the transmission of reset notifications between RE nodes, as well as other topologies, such as tree, multi-link REC/RE connections, etc.

Furthermore, in the illustrated example, the REC nodes are arranged to generate reset request interrupts and reset acknowledgement interrupts upon receipt of respective reset notifications. However, in some examples, the application layer of the respective nodes may be arranged to poll the values of the L1-inband protocol to determine when a reset request/acknowledgement notification has been received, alleviating the need for such interrupts.

In the foregoing specification, the invention has been described with reference to specific examples of embodiments of the invention. It will, however, be evident that various modifications and changes may be made therein without departing from the broader scope of the invention as set forth in the appended claims.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, in FIG. 7 the CPRI data link layer component 730 and CPRI physical layer component 720 have been illustrated as separate logical components for ease of understanding. However, it will be appreciated that the CPRI data link layer component 730 and CPRI physical layer component 720 may be implemented within a single functional component.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method of resetting at least one node within a Common Public Radio Interface radio base station system (500); the method comprising, at an end-point Radio Equipment Controller node (410, 510) within the Common Pubic Radio Interface radio base station system:
receiving on a slave port (414, 514) a reset request notification (462, 562), and in response thereto
transmitting on the slave port a reset acknowledgement notification (464, 570) comprising a reset bit being set within at least ten hyperframes.

2. The method of Claim 1, wherein the method further comprises, at least one networking Radio Equipment Controller node (420, 520) within the Common Pubic Radio Interface radio base station system (500):
receiving on a master port (422, 522) a reset acknowledgement notification (464, 570) comprising a reset bit being set within at least ten hyperframes, and in response thereto
transmitting on a slave port (424, 524) a reset acknowledgement notification (466, 572) comprising a reset bit being set within at least ten hyperframes.

3. The method of any preceding Claim, wherein the method further comprises, at a reset initiating Radio Equipment Controller node (430, 530) within the Common Pubic Radio Interface radio base station system (500):
receiving a reset command, and in response thereto:
transmitting on an uplink of at least one master port (432, 532) a reset request notification (460, 560).

4. The method of Claim 3, wherein the method further comprises, at the reset initiating Radio Equipment Controller node (430, 530) upon the subsequent receipt of a reset acknowledgement notification (466, 572) on the downlink of the at least one master port (432, 532), transmitting on a downlink of at least one master port (434, 534) of the reset initiating Radio Equipment Controller node a reset request notification (470, 580).

5. The method of Claim 4, wherein the method comprises transmitting on the downlink of the at least one master port (434, 534) of the reset initiating Radio Equipment Controller node (430, 530) a reset request notification (470, 580) comprising a reset bit being set within at least ten hyperframes upon receipt of a reset acknowledgement notification (466, 572) on the downlink of the at least one master port a reset acknowledgement (466, 572) notification comprising a reset bit being set within at least ten hyperframes.

6. The method of any preceding Claim, wherein the Common Pubic Radio Interface radio base station system (500) comprises at least one of:
a chain topology;
a star topology;
a ring topology; and
a tree topology.

7. The method of any preceding Claim, wherein the Common Pubic Radio Interface radio base station system (500) forms a part of at least one of:
a Universal Mobile Telecommunications System, UMTS, wireless communications network;
a WiMAX wireless communication network;
an Evolved UMTS Terrestrial Radio Access, E-UTRA, wireless communications network; and
a Global System for Mobile communications, GSM, wireless communications network.

8. A Common Public Radio Interface Radio Equipment Controller module (710) arranged to provide Common Pubic Radio Interface functionality within an end-point Radio Equipment Controller node (410, 510); the Common Pubic Radio Interface module being arranged to:
receive on a slave port (414, 514) thereof a reset request notification(462, 562), and in response thereto
transmit on the slave port a reset acknowledgement notification (464, 570) comprising a reset bit being set within at least ten hyperframes.

9. A Common Public Radio Interface Radio Equipment Controller module (710) arranged to provide Common Pubic Radio Interface functionality within a networking Radio Equipment Controller node (420, 520); the Common Pubic Radio Interface module being arranged to:
receive on a master port (422, 522) thereof a reset acknowledgement notification (464, 570) comprising a reset bit being set within at least ten hyperframes, and in response thereto
transmit on a slave port (424, 524) thereof a reset acknowledgement notification (466, 572) comprising a reset bit being set within at least ten hyperframes.

10. The Common Public Radio Interface Radio Equipment Controller module (710) of either of claim 8 or claim 9 arranged to provide Common Pubic Radio Interface functionality within a reset initiating Radio Equipment Controller node (430, 530); the Common Pubic Radio Interface module being arranged to:
receive a reset command, and in response thereto:
transmit on an uplink of at least one master port (432, 532) thereof a reset request notification (460, 560).

11. The Common Pubic Radio Interface module of Claim 10, wherein the Common Pubic Radio Interface module is further arranged, upon receipt of a reset acknowledgement notification (466, 572) on the downlink of the at least one master port (432, 532) thereof, to transmit on a downlink of at least one master port (434, 534) of the reset initiating Radio Equipment Controller node (430, 530) a reset request notification (470, 580) comprising a reset bit being set within at least ten hyperframes.

12. A Common Pubic Radio Interface module according to any of Claims 8 to 11 implemented within an integrated circuit device comprising at least one die within a single integrated circuit package.

13. A Common Public Radio Interface Radio Equipment Controller node comprising at least one Common Pubic Radio Interface module according to any of Claims 8 to 12.

14. A radio base station system comprising at least one Common Pubic Radio Interface Radio Equipment Controller node according to Claim 13.

15. A wireless communication network comprising at least one radio base station system according to Claim 14.

## Patentansprüche

1. Ein Verfahren zum Neueinstellen zumindest eines Knotens innerhalb eines Common Public Radio Interface Funk Basisstation Systems (500); wobei das Verfahren aufweist an einem Endpunkt Funkausrüstung Controller Knoten (410, 510) innerhalb des Common Public Radio Interface Funk Basisstation Systems:
Empfangen an einem Slave Port (414, 514) einer Neueinstellen Anfrage Mitteilung (462, 562) und in Reaktion darauf
Übertragen auf dem Slave Port einer Neueinstellen Bestätigungsmitteilung (464, 570) aufweisend ein Neueinstellen Bit, welches innerhalb von zumindest zehn Hyperframes festgelegt ist.

2. Das Verfahren gemäß Anspruch 1, wobei das Verfahren ferner aufweist zumindest einen vernetzten Funkausrüstung Controller Knoten (420, 520) innerhalb des Common Public Radio Interface Funk Basisstation Systems (500):
Empfangen an einem Master Port (422, 522) einer Neueinstellen Bestätigungsmitteilung (464, 570) aufweisend ein Neueinstellen Bit, welches innerhalb von zumindest zehn Hyperframes festgelegt ist, und in Reaktion darauf
Übertragen an einem Slave Port (424, 524) einer Neueinstellen Bestätigungsmitteilung (466, 572) aufweisend ein Neueinstellen Bit, welches innerhalb von zumindest zehn Hyperframes festgelegt ist.

3. Das Verfahren gemäß irgendeinem vorangehenden Anspruch, wobei das Verfahren ferner aufweist an einem Neueinstellen Initiieren Funkausrüstung Controller Knoten (430, 530) innerhalb des Common Public Radio Interface Funk Basisstation Systems (500):
Empfangen eines Neueinstellen Befehls und in Reaktion darauf:
Übertragen an einem Uplink von zumindest einem Master Port (432, 532) einer Neueinstellen Anfrage Mitteilung (460, 560).

4. Das Verfahren gemäß Anspruch 3, wobei das Verfahren ferner aufweist an dem Neueinstellen Initiieren Funkausrüstung Controller Knoten (430, 530) auf den nachfolgenden Empfang einer Neueinstellen Bestätigungsmitteilung (466, 572) an dem Downlink des zumindest einen Master Ports (432, 532) hin
Übertragen an einem Downlink des zumindest einen Master Ports (434, 534) des Neueinstellen Initiieren Funkausrüstung Controller Knotens einer Neueinstellen Anfrage Mitteilung (470, 580).

5. Das Verfahren gemäß Anspruch 4, wobei das Verfahren aufweist
Übertragen an dem Downlink des zumindest einen Master Ports (434, 534) des Neueinstellen Initiieren Funkausrüstung Controller Knotens (430, 530) einer Neueinstellen Anfrage Mitteilung (470, 580) aufweisend ein Neueinstellen Bit, welches innerhalb zumindest zehn Hyperframes festgelegt ist, auf den Empfang einer Neueinstellen Bestätigungsmitteilung (466, 572) an dem Downlink des zumindest einen Master Ports hin, einer Neueinstellen Bestätigungsmitteilung (466, 572) aufweisend ein Neueinstellen Bit, welches innerhalb von zumindest zehn Hyperframes festgelegt ist.

6. Das Verfahren gemäß irgendeinem vorangehenden Anspruch, wobei das Common Public Radio Interface Funk Basisstation System (500) zumindest eines aufweist von:
einer Kettentopologie;
einer Sterntopologie;
einer Ringtopologie; und
einer Baumtopologie.

7. Das Verfahren gemäß irgendeinem vorangehenden Anspruch, wobei das Common Public Radio Interface Funk Basisstation System (500) einen Teil bildet von zumindest einem von:
einem universellen mobilen Telekommunikationssystem, UMTS, drahtlosen Kommunikationsnetzwerk;
einem WiMAX drahtlosen Kommunikationsnetzwerk;
einem entwickelten UMTS terrestrischen Funkzugang, E-UTRA, drahtlosen Kommunikationsnetzwerk; und
einem globalen System für mobile Kommunikation, GSM, drahtlosen Kommunikationsnetzwerk.

8. Ein Common Public Radio Interface Funkausrüstung Controller Modul (710), welches eingerichtet ist zum Bereitstellen einer Common Public Radio Interface Funktionalität innerhalb eines Endpunkt Funkausrüstung Controller Knotens (410, 510); wobei das Common Public Radio Interface Modul eingerichtet ist zum
Empfangen an einem Slave Port (414, 514) davon, einer Neueinstellen Anfrage Mitteilung (462, 562) und in Reaktion darauf
Übertragen an dem Slave Port einer Neueinstellen Bestätigungsmitteilung (464, 570) aufweisend ein Neueinstellen Bit, welches innerhalb von zumindest zehn Hyperframes festgelegt ist.

9. Ein Common Public Radio Interface Funkausrüstung Controller Modul (710), welches eingerichtet ist zum Bereitstellen einer Common Public Radio Interface Funktionalität innerhalb eines vernetzten Funkausrüstung Controller Knotens (420, 520); wobei das Common Public Radio Interface Modul eingerichtet ist zum:
Empfangen an einem Master Port (422, 522) davon einer Neueinstellen Bestätigungsmitteilung (464, 570) aufweisend ein Neueinstellen Bit, welches innerhalb von zumindest zehn Hyperframes festgelegt ist, und in Reaktion darauf
Übertragen an einem Slave Port (424, 524) davon einer Neueinstellen Bestätigungsmitteilung (466, 572) aufweisend ein Neueinstellen Bit, welches innerhalb von zumindest zehn Hyperframes festgelegt ist.

10. Das Common Public Radio Interface Funkausrüstung Controller Modul (710) von einem der Ansprüche 8 oder 9, welches eingerichtet ist zum Bereitstellen einer Common Public Radio Interface Funktionalität innerhalb eines Neueinstellen Initiieren Funkausrüstung Controller Knotens (430, 530); wobei das Common Public Radio Interface Modul eingerichtet ist zum:
Empfangen eines Neueinstellen Befehls und in Reaktion darauf:
Übertragen an einem Uplink des zumindest einen Master Ports (432,532) davon einer Neueinstellen Anfrage Mitteilung (460, 560).

11. Das Common Public Radio Interface Modul gemäß Anspruch 10, wobei das Common Public Radio Interface Modul ferner eingerichtet ist, auf den Empfang einer Neueinstellen Bestätigungsmitteilung (466, 572) an dem Downlink des zumindest einen Master Ports (432, 532) davon hin, zum
Übertragen an einem Downlink des zumindest einen Master Ports (434, 534) des Neueinstellen Initiieren Funkausrüstung Controller Knotens (430, 530) einer Neueinstellen Anfrage Mitteilung (470, 580) aufweisend ein Neueinstellen Bit, welches innerhalb von zumindest zehn Hyperframes festgelegt ist.

12. Ein Common Public Radio Interface Modul gemäß irgendeinem der Ansprüche 8 bis 11, welches innerhalb einer integrierten Schaltkreisvorrichtung implementiert ist, welche zumindest einen Die innerhalb eines einzelnen integrierten Schaltkreis Packages aufweist.

13. Ein Common Public Radio Interface Funkausrüstung Controller Knoten aufweisend zumindest ein Common Public Radio Interface Modul gemäß irgendeinem der Ansprüche 8 bis 12.

14. Ein Funk Basisstation System aufweisend zumindest einen Common Public Radio Interface Funkausrüstung Controller Knoten gemäß Anspruch 13.

15. Ein drahtloses Kommunikationsnetzwerk aufweisend zumindest ein Funk Basisstation System gemäß Anspruch 14.

## Revendications

1. Procédé permettant de réinitialiser au moins un noeud dans un système de station de base radio d'interface radio publique commune CPRI (500) ; le procédé comprenant, à un noeud de contrôleur d'équipement radio d'extrémité (410, 510) dans le système de station de base radio d'interface radio publique commune :
recevoir sur un port esclave (414, 514) une notification de requête de réinitialisation (462, 562), et en réponse à cette dernière
transmettre sur le port esclave une notification d'accusé de réception de réinitialisation (464, 570) comportant un bit de réinitialisation positionné dans au moins dix hypertrames.

2. Procédé selon la revendication 1, dans lequel le procédé comprend en outre, au moins un noeud de contrôleur d'équipement radio en réseau (420, 520) dans le système de station de base radio d'interface radio publique commune (500) :
recevoir sur un port maître (422, 522) une notification d'accusé de réception de réinitialisation (464, 570) comportant un bit de réinitialisation positionné dans au moins dix hypertrames, et en réponse à cette dernière
transmettre sur un port esclave (424, 524) une notification d'accusé de réception de réinitialisation (466, 572) comportant un bit de réinitialisation positionné dans au moins dix hypertrames.

3. Procédé selon l'une quelconque des revendications précédentes, dans lequel le procédé comprend en outre, à une réinitialisation initiant un noeud de contrôleur d'équipement radio (430, 530) dans le système de station de base radio d'interface radio publique commune (500) :
recevoir une commande de réinitialisation, et en réponse à cette dernière :
transmettre sur une liaison montante d'au moins un port maître (432, 532) une notification de requête de réinitialisation (460, 560).

4. Procédé selon la revendication 3, dans lequel le procédé comprend en outre, à la réinitialisation initiant un noeud de contrôleur d'équipement radio (430, 530) lors de la réception subséquente d'une notification d'accusé de réception de réinitialisation (466, 572) sur la liaison descendante dudit port maître (432, 532), transmettre sur une liaison descendante d'au moins un port maître (434, 534) de la réinitialisation initiant le noeud de contrôleur d'équipement radio une notification de requête de réinitialisation (470, 580).

5. Procédé selon la revendication 4, dans lequel le procédé comprend : transmettre sur la liaison descendante dudit port maître (434, 534) de la réinitialisation initiant un noeud de contrôleur d'équipement radio (430, 530) une notification de requête de réinitialisation (470, 580) comprenant un bit de réinitialisation positionné dans au moins dix hypertrames lors de la réception d'une notification d'accusé de réception de réinitialisation (466, 572) sur la liaison descendante dudit port maître, une notification d'accusé de réception de réinitialisation (466, 572) comportant un bit de réinitialisation positionné dans au moins dix hypertrames.

6. Procédé selon l'une quelconque des revendications précédentes, dans lequel le système de station de base radio d'interface radio publique commune (500) comprend au moins un élément parmi :
une topologie en chaîne ;
une topologie en étoile ;
une topologie en anneau ; et
une topologie en arbre.

7. Procédé selon l'une quelconque des revendications précédentes, dans lequel le système de station de base radio d'interface radio publique commune (500) forme une partie d'au moins un élément parmi :
un réseau de communication sans fil de système universel de télécommunication avec les mobiles, UMTS ;
un réseau de communication sans fil WiMAX ;
un réseau de communication sans fil d'accès radio terrestre UMTS évolué, E-UTRA ; et
un réseau de communication sans fil de système mondial de communication avec les mobiles, GSM.

8. Module de contrôleur d'équipement radio (710) d'interface radio publique commune conçu pour fournir une fonctionnalité d'interface radio publique commune dans un noeud de contrôleur d'équipement radio d'extrémité (410, 510) ; le module d'interface radio publique commune étant conçu pour :
recevoir sur un port esclave (414, 514) une notification de requête de réinitialisation (462, 562), et en réponse à cette dernière
transmettre sur le port esclave une notification d'accusé de réception de réinitialisation (464, 570) comprenant un bit de réinitialisation positionné dans au moins dix hypertrames.

9. Module de contrôleur d'équipement radio (710) d'interface radio publique commune conçu pour fournir une fonctionnalité d'interface radio publique commune dans un noeud de contrôleur d'équipement radio en réseau (420, 520) ; le module d'interface radio publique commune étant conçu pour :
recevoir sur un port maître (422, 522) une notification d'accusé de réception de réinitialisation (464, 570) comprenant un bit de réinitialisation positionné dans au moins dix hypertrames, et en réponse à cette dernière
transmettre sur un port esclave (424, 524) une notification d'accusé de réception de réinitialisation (466, 572) comportant un bit de réinitialisation positionné dans au moins dix hypertrames.

10. Module de contrôleur d'équipement radio (710) d'interface radio publique commune selon la revendication 8 ou la revendication 9, conçu pour fournir une fonctionnalité d'interface radio publique commune dans une réinitialisation initiant un noeud de contrôleur d'équipement radio (430, 530) ; le module d'interface radio publique commune étant conçu pour :
recevoir une commande de réinitialisation, et en réponse à cette dernière ;
transmettre sur une liaison montante d'au moins un port maître (432, 532) une notification de requête de réinitialisation (460, 560).

11. Module d'interface radio publique commune selon la revendication 10, dans lequel le module d'interface radio publique commune est en outre conçu pour, lors de la réception d'une notification d'accusé de réception de réinitialisation (466, 572) sur la liaison descendante dudit port maître (432, 532), transmettre sur une liaison descendante d'au moins un port maître (434, 534) de la réinitialisation initiant le noeud de contrôleur d'équipement radio (430, 530) une notification de requête de réinitialisation (470, 580) comportant un bit de réinitialisation positionné dans au moins dix hypertrames.

12. Module d'interface radio publique commune selon l'une quelconque des revendications 8 à 11 mis en oeuvre dans un dispositif de circuit intégré comprenant au moins une puce à l'intérieur d'un package unique de circuit intégré.

13. Noeud de contrôleur d'équipement radio d'interface radio publique commune comprenant au moins un module d'interface radio publique commune selon l'une quelconque des revendications 8 à 12.

14. Système de station de base radio comprenant au moins un noeud de contrôleur d'équipement radio d'interface radio publique commune selon la revendication 13.

15. Réseau de communication sans fil comprenant au moins un système de station de base radio selon la revendication 14.
